# EUROPEAN PATENT APPLICATION

(11) **EP 4 534 234 A1**
(43) Date of publication of application: **09.04.2025**
(21) Application number: 24205076.3
(22) Date of filing: 07.10.2024
(51) Int. Cl.: B23K 26/382, B23K 26/03, B23K 26/60, B23K 101/00, B23K 26/08

(54) **ASSEMBLY AND METHOD FOR MACHINING A COMPONENT**

(30) Priority: 06.10.2023 US 202318377475
(71) Applicant: PRATT & WHITNEY CANADA CORP., Longueuil, Québec J4G 1A1 (CA)
(72) Inventor: GUIASSA, Rachid, Longueuil, J4G 1A1 (CA); GAGNE, Carl, Longueuil, J4G 1A1 (CA)
(74) Representative: Dehns

(57) **Abstract**

A CNC assembly (68) includes a machining system (70) and a controller (72). The machining system (70) includes at least one machining tool. The controller (72) is configured to measure a surface deviation of a drilling surface of a component (54) from a 3D component model for the component using a position measurement probe to identify a position of the drilling surface at a plurality of points, determine a compensation vector of a nominal hole for the drilling surface using the measured surface deviation, determine a compensated laser source stand-off position and a compensated laser source orientation for the nominal hole using the determined compensation vector, position a laser source in the compensated laser source stand-off position and the compensated laser source orientation, and form a component hole in the component (54) using the laser source by directing a laser beam to the drilling surface with the laser source in the compensated laser source stand-off position and the compensated laser source orientation.

## Description

### TECHNICAL FIELD

This invention relates generally to assemblies and methods for machining aircraft propulsion system components and, more particularly, to laser drilling components deviating from a nominal shape.

### BACKGROUND OF THE ART

Components, such as those used for aircraft propulsion systems, may be manufactured and/or repaired using automated machining assemblies. Various machining assemblies and methods for controlling machining assemblies are known in the art. While these known machining assemblies and control methods have various advantages, there is still room in the art for improvement.

### SUMMARY

It should be understood that any or all of the features or embodiments described herein can be used or combined in any combination with each and every other feature or embodiment described herein unless expressly noted otherwise.

According to an aspect of the present invention, a computer numeric control (CNC) assembly includes a machining system and a controller. The machining system includes at least one machining tool. The machining system is configured to move the at least one machining tool relative to a component. The controller includes a processor in communication with a non-transitory memory storing instructions, which instructions when executed by the processor, cause the processor to measure a surface deviation of a drilling surface of the component from a three-dimensional (3D) component model for the component using a position measurement probe of the at least one machining tool to identify a position of the drilling surface at a plurality of points on the drilling surface, determine a compensation vector of a nominal hole for the drilling surface using the measured surface deviation, determine a compensated laser source stand-off position and a compensated laser source orientation for the nominal hole using the determined compensation vector, position a laser source of the at least one machining tool in the compensated laser source stand-off position and the compensated laser source orientation with the machining system, and form a component hole in the component using the laser source by directing a laser beam to the drilling surface with the laser source in the compensated laser source stand-off position and the compensated laser source orientation.

In any of the aspects or embodiments described above and herein, the instructions, when executed by the processor, may further cause the processor to determine the compensation vector using a deviation distance between a closest one of the plurality of points to the nominal hole. The deviation distance may be a distance between the drilling surface and the 3D component model at the closest one of the plurality of points.

In any of the aspects or embodiments described above and herein, the instructions, when executed by the processor, may further cause the processor to determine the compensation vector using a deviation distance between an adjacent subset of the plurality of points adjacent the nominal hole. The deviation distance may be a distance between the drilling surface and the 3D component model at each point of the adjacent subset of the plurality of points.

In any of the aspects or embodiments described above and herein, the instructions, when executed by the processor, may further cause the processor to determine the compensation vector using an average distance of the deviation distance at each point of the adjacent subset of the plurality of points.

In any of the aspects or embodiments described above and herein, the instructions, when executed by the processor, may further cause the processor to determine the compensation vector using a weighted average distance of the deviation distance at each point of the adjacent subset of the plurality of points. The weighted average distance may be determined based on a proximity of each point of the adjacent subset of the plurality of points to the nominal hole.

In any of the aspects or embodiments described above and herein, the instructions, when executed by the processor, may further cause the processor to determine the compensation vector using a deviation distance between an adjacent subset of the plurality of points within a predetermined surface distance of the nominal hole. The deviation distance may be a distance between the drilling surface and the 3D component model at each point of the adjacent subset of the plurality of points.

In any of the aspects or embodiments described above and herein, the instructions, when executed by the processor, may further cause the processor to form a plurality of component holes in the component using the laser source, and the plurality of component holes includes the component hole.

In any of the aspects or embodiments described above and herein, a quantity of the plurality of points may be a predetermined value for the component.

In any of the aspects or embodiments described above and herein, the position measurement probe may be a touch probe.

In any of the aspects or embodiments described above and herein, the instructions, when executed by the processor, may further cause the processor to identify the position of the drilling surface at the plurality of points on the drilling surface by positioning the position measurement probe with the machining system to contact the drilling surface at each of the plurality of points.

According to another aspect of the present invention, a method for machining a component using a CNC assembly is provided. The method includes measuring a deviation distance of the component from a three-dimensional (3D) component model for the component using a position measurement probe machining tool at a plurality of points on the component, determining a compensation vector of a nominal hole of the component using the measured deviation distance, determining a compensated laser source stand-off position and a compensated laser source orientation for the nominal hole using the determined compensation vector, positioning a laser source machining tool in the compensated laser source stand-off position and the compensated laser source orientation, and forming a component hole in the component using the laser source machining tool by directing a laser beam to the component with the laser source machining tool in the compensated laser source stand-off position and the compensated laser source orientation.

In any of the aspects or embodiments described above and herein, the component may include an original body portion and a replacement body portion disposed on the original body portion. Forming the component hole in the component may include forming the component hole in the replacement body portion.

In any of the aspects or embodiments described above and herein, the component may have a first dimension, the 3D component may have a second dimension corresponding to the first dimension, and the first dimension may be different than the second dimension.

In any of the aspects or embodiments described above and herein, the method may further include identifying the measured deviation distance exceeds a deviation distance threshold and, in response to the identification that the measured deviation distance exceeds the deviation distance threshold, performing the step of determining the compensation vector of the nominal hole of the component using the measured deviation distance.

In any of the aspects or embodiments described above and herein, determining the compensation vector may include determining the compensation vector using the deviation distance between a closest one of the plurality of points to the nominal hole.

In any of the aspects or embodiments described above and herein, determining the compensation vector may include determining the compensation vector using the deviation distance between an adjacent subset of the plurality of points adjacent the nominal hole.

According to another aspect of the present invention, a computer numeric control (CNC) assembly includes a machining system and a controller. The machining system includes a robotic arm, a touch probe, and a laser source. The controller includes a processor in communication with a non-transitory memory storing instructions, which instructions when executed by the processor, cause the processor to measure a surface deviation of a component from a three-dimensional (3D) component model for the component by positioning the touch probe on the component at a plurality of points and measuring a deviation distance between the component at the plurality of points and the 3D component model and form a plurality of component holes of the component by, sequentially, determining a compensation vector for a nominal hole corresponding to one of the plurality of component holes using the measured deviation distance, determining a compensated laser source stand-off position and a compensated laser source orientation for the nominal hole using the determined compensation vector, positioning the laser source in the compensated laser source stand-off position and the compensated laser source orientation with the machining system, and directing a laser beam to the component with the laser source at the compensated laser source stand-off position and the compensated laser source orientation.

In any of the aspects or embodiments described above and herein, the instructions, when executed by the processor, may further cause the processor to determine the compensation vector using the deviation distance between a closest one of the plurality of points to the nominal hole.

In any of the aspects or embodiments described above and herein, the instructions, when executed by the processor, may further cause the processor to determine the compensation vector using the deviation distance between an adjacent subset of the plurality of points adjacent the nominal hole.

In any of the aspects or embodiments described above and herein, the instructions, when executed by the processor, may further cause the processor to determine the compensation vector using an average distance of the deviation distance at each point of the adjacent subset of the plurality of points.

The present invention, and all its aspects, embodiments and advantages associated therewith will become more readily apparent in view of the detailed description provided below, including the accompanying drawings.

### DESCRIPTION OF THE DRAWINGS

FIG. 1 schematically illustrates a cutaway, side view of a gas turbine engine for an aircraft propulsion system, in accordance with one or more embodiments of the present invention.
FIG. 2 schematically illustrates a component and a three-dimensional (3D) component model for the component, in accordance with one or more embodiments of the present invention.
FIG. 3 illustrates a side view of a component, in accordance with one or more embodiments of the present invention.
FIG. 4 schematically illustrates a computer numeric control (CNC) assembly, in accordance with one or more embodiments of the present invention.
FIGS. 5A-B schematically illustrate exemplary machining tools for a machining system of a CNC assembly, in accordance with one or more embodiments of the present invention.
FIG. 6 illustrates a block diagram depicting a method for machining a component using a CNC assembly, in accordance with one or more embodiments of the present invention.
FIG. 7 schematically illustrates a perspective view of a component with a plurality of position measurement points, in accordance with one or more embodiments of the present invention.
FIG. 8 schematically illustrates a portion of a component relative to a 3D component model for the component, in accordance with one or more embodiments of the present invention.
FIG. 9 illustrates a portion of a drilling surface for a component, in accordance with one or more embodiments of the present invention.
FIG. 10 illustrates a portion of a component undergoing a laser drilling process, in accordance with one or more embodiments of the present invention.

### DETAILED DESCRIPTION

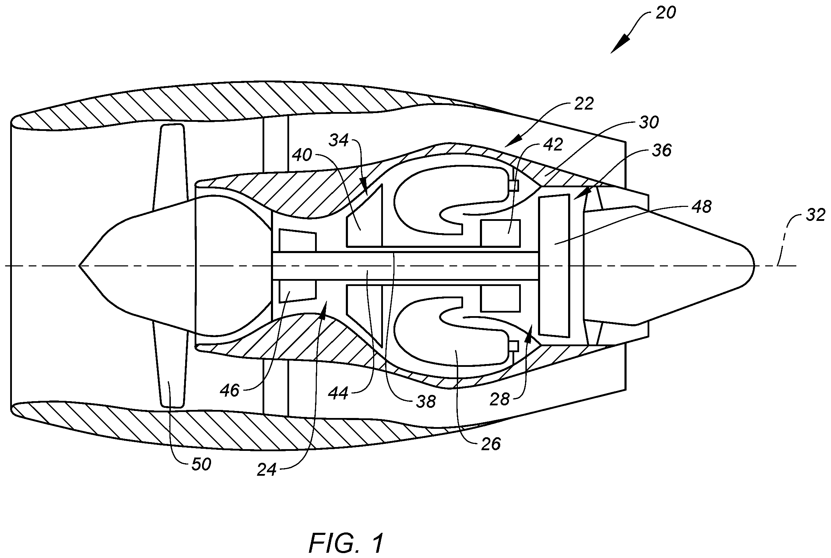

FIG. 1 illustrates a propulsion system 20 configured for an aircraft. Briefly, the aircraft may be a fixed-wing aircraft (e.g., an airplane), a rotary-wing aircraft (e.g., a helicopter), a tilt-rotor aircraft, a tilt-wing aircraft, or any other aerial vehicle. Moreover, the aircraft may be a manned aerial vehicle or an unmanned aerial vehicle (UAV, e.g., a drone). The aircraft propulsion system 20 of FIG. 1 includes a gas turbine engine 22. The gas turbine engine 22 of FIG. 1 is configured as a turbofan gas turbine engine.

The gas turbine engine 22 of FIG. 1 includes a compressor section 24, a combustor 26 (e.g., an annular combustor), a turbine section 28, and an engine static structure 30 (e.g., engine cases, bearing assemblies, and other structural components of the gas turbine engine 22). The compressor section 24, the combustor 26, and the turbine section 28 are arranged along an axial centerline 32 (e.g., a rotational axis) of the gas turbine engine 22. Components of the compressor section 24 and the turbine section 28 may be arranged as a first rotational assembly 34 (e.g., a high-pressure spool) and a second rotational assembly 36 (e.g., a low-pressure spool) as shown, for example, in FIG. 1. The first rotational assembly 34 and the second rotational assembly 36 are mounted for rotation about the axial centerline 32 relative to the engine static structure 30.

The first rotational assembly 34 includes a first shaft 38, a bladed first compressor rotor 40, and a bladed first turbine rotor 42. The first shaft 38 interconnects the bladed first compressor rotor 40 and the bladed first turbine rotor 42. The second rotational assembly 36 includes a second shaft 44, a bladed second compressor rotor 46, and a bladed second turbine rotor 48. The second shaft 44 interconnects the bladed second compressor rotor 46 and the bladed second turbine rotor 48. The second shaft 44 may additionally be directly or indirectly connected to a bladed fan rotor 50.

In operation of the gas turbine engine 22 of FIG. 1, ambient air is directed by rotation of the bladed fan rotor 50 into a core flow path and a bypass flow path. Airflow along the core flow path is compressed in the compressor section 24 (e.g., by the bladed first compressor rotor 40 and the bladed second compressor rotor 46), mixed and burned with fuel in the combustor 26, and then directed through the turbine section 28 (e.g., the bladed first turbine rotor 42 and the bladed second turbine rotor 48). The bladed first turbine rotor 42 and the bladed second turbine rotor 48 rotationally drive the first rotational assembly 34 and the second rotational assembly 36, respectively, in response to the combustion gas flow through turbine section 28.

A component for equipment, such as the gas turbine engine 22 of FIG. 1, may have a size, a shape, a curvature, etc. which deviates from a design size, shape, and/or curvature of a design configuration (e.g., a nominal configuration) for the component (e.g., the component may be deformed). Examples of components may include gas turbine engine 22 components such as, but not limited to, combustor liner panels, heat shields, turbine vanes, turbine rotor blades, and the like. The present invention, however, is not limited to the aforementioned exemplary gas turbine engine components, or to gas turbine engine components in general. Deformation of a component may be a result of that component's manufacturing process. Deformation of a component may additionally or alternatively be based on operational use of the component. For example, the component may be exposed to high-temperature conditions, high-pressure conditions, high-strain conditions, and the like, which may cause some amount of deformation of the component. Deformation of a component may additionally or alternatively be caused by a repair process for the component. For example, a body portion of the component may be damaged during operational use of the component and the damaged body portion may be removed and replaced by a new body portion. In each of these cases, the component may have a size, shape, curvature, etc. which is within acceptable dimensional tolerances for continued use. However, the deformation of the component may complicate machining processes that may subsequently be applied to the component. For example, during a laser drill process applied to the component to form one or more holes of the component, a laser source may be positioned at a predetermined position relative to a theorical position of the component (e.g., as executed by the CNC tool path instructions) to provide an appropriate stand-off distance between the laser source and the component. The stand-off distance between the laser source and the component may have strict tolerance requirements (e.g., less than 0.001 inches (0.0025 cm)) to facilitate formation of the hole with the proper size (e.g., diameter), shape, and orientation. As a result of component deformation, the laser source positioned at the predetermined position may be outside of the stand-off distance tolerance.

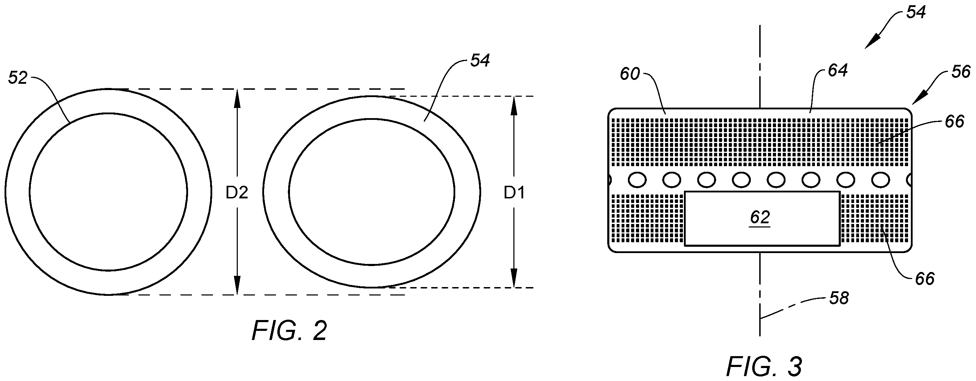

FIG. 2 illustrates, for example, a three-dimensional (3D) component model 52 and a component 54 which may be manufactured using the 3D component model 52 or to otherwise conform to the 3D component model 52. The 3D component model 52 of FIG. 2 may be a nominal definition of the component 54 of FIG. 2, which 3D component model 52 may be executed, for example, by a computer-aided drafting (CAD) or a component-aided manufacturing (CAM) program. The component 54 may have at least one dimension (e.g., a height, a width, a length, a diameter, a curvature, etc.) which deviates from the 3D component model 52 due to a deformation of the component 54. For example, the component 54 of FIG. 2 has a diameter D1 which is different (e.g., shorter than) a diameter D2 of the 3D component model 52.

FIG. 3 illustrates an exemplary configuration of the component 54. The component 54 of FIG. 3 is a combustor liner panel 56 configured for use with a gas turbine engine combustor such as the combustor 26 of FIG. 1. The combustor liner panel 56 is an annular panel extending circumferentially about (e.g., completely around) an axial centerline 58. The combustor liner panel 56 includes an original body portion 60 and a replacement body portion 62. The replacement body portion 62 may be a body portion mounted to, welded to, deposited on, or otherwise attached to the original body portion 60. For example, during a repair process for the combustor liner panel 56, a damaged, excessively-deformed, or otherwise degraded portion of the original body portion 60 may be removed and the replacement body portion 62 may be installed onto the combustor liner panel 56 to replace the removed portion of the original body portion 60. The original body portion 60 and the replacement body portion 62 form an outer surface 64 of the combustor liner panel 56. The combustor liner panel 56 includes a plurality of holes 66 (e.g., effusion cooling holes) configured to facilitate effusion cooling of the combustor liner panel 56 during operation of a gas turbine engine in which the combustor liner panel 56 may be installed. For the nominal configuration of the combustor liner panel 56, the holes 66 may have a hole pattern for which the holes 66 are distributed about an entire circumference of the combustor liner panel 56. The original body portion 60 of FIG. 3 forms the holes 66 through the outer surface 64. The combustor liner panel 56 of FIG. 3 is illustrated in a state in which the holes 66 have not yet been formed through the replacement body portion 62 to establish the hole pattern of the holes 66 for the combustor liner panel 56 (e.g., the replacement body portion 62 is imperforate in FIG. 3). While the component 54 of FIG. 3 is illustrated and described as an annular combustor liner panel for a gas turbine engine, it should be understood that the present invention is not limited in application to annular components, combustor liner panels, gas turbine engine components, or any other particular component configuration.

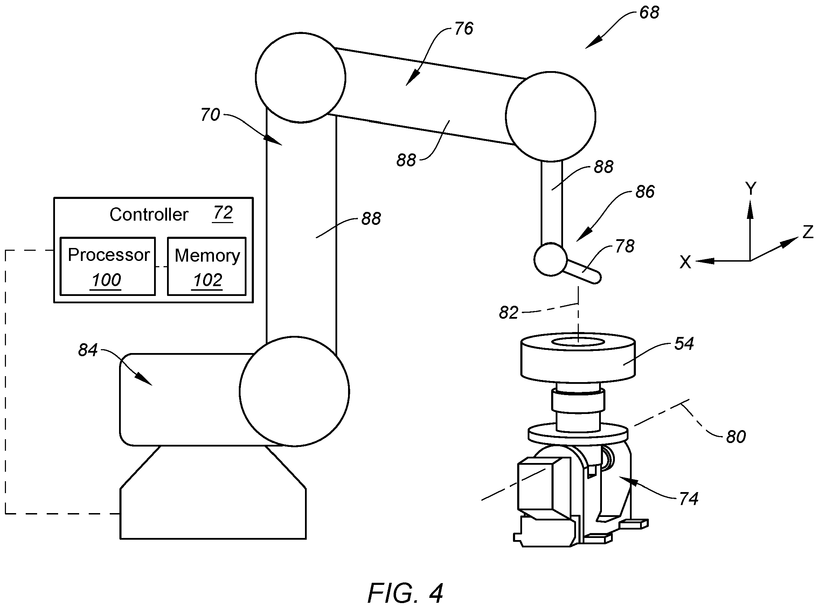

FIG. 4 schematically illustrates an exemplary computer numeric control (CNC) assembly 68 which may be used for machining the component 54. The CNC assembly 68 of FIG. 4 includes a machining system 70 and a controller 72.

The machining system 70 of FIG. 4 facilitates automated control of one or more machining tools based on coded programming instructions executed by the controller 72. The machining system 70 of FIG. 4 includes a workpiece positioning fixture 74, a robotic arm 76, and an end effector 78. To be clear, this machining system 70 configuration of FIG. 4 is exemplary, and the present invention CNC assembly 68 is not limited to use with the particular machining system 70 configuration of FIG. 4.

The workpiece positioning fixture 74 is configured to securely retain and position the component 54 for a machining process. For example, the workpiece positioning fixture 74 may be configured to rotate the component 54 relative to one or more axes. For example, the workpiece positioning fixture 74 may be configured to rotate the component 54 about a first axis 80 and/or a second axis 82 as shown in FIG. 4.

The robotic arm 76 includes a base end 84, a distal end 86, and one or more movable joints 88. Each movable joint 88 may be moved or otherwise controlled, for example, by an independent servo motor or other actuator (not shown). The distal end 86 is connected to the end effector 78. The robotic arm 76 is configured to move the end effector 78 relative to the component 54. For example, the robotic arm 76 may be configured to move the end effector 78 along an x-axis, a y-axis, and/or a z-axis, as well as to rotate the end effector 78 relative to the x-axis, the y-axis, and/or the z-axis (e.g., pitch, yaw, and roll).

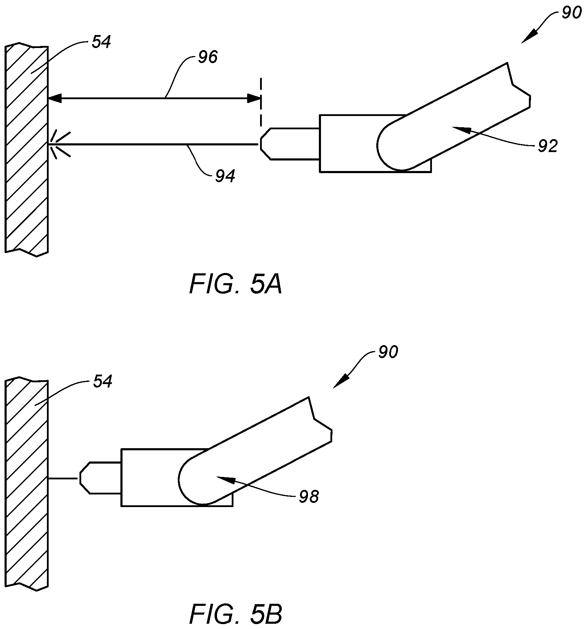

The end effector 78 is mounted to or otherwise disposed at the distal end 86. The end effector 78 may be configured selectively attachable to and detachable from the distal end 86. The end effector 78 includes a machining tool 90. FIGS. 5A-B illustrate exemplary configurations of the machining tool 90. The machining tool 90 of FIG. 5A is a laser source 92. The laser source 92 is configured for drilling (e.g., perforating) a material of the component 54. For example, the laser source 92 may be configured to form the holes 66 of the component 54 of FIG. 3. The laser source 92 is configured to generate the laser beam 94 and direct the laser beam 94 to the component 54 for a laser drilling operation. The laser drilling operation may include, for example, ablating a material of the component 54 using the laser beam 94. While directing the laser beam 94 to the component 54 for the laser drilling operation, the laser source 92 may be separated (e.g., spaced) from the component 54 by a stand-off distance 96. For example, the stand-off distance 96 may be a distance from a tip (e.g., a distal end) of the laser source 92 to a drilling surface of the component 54. The machining tool 90 of FIG. 5B is a position measurement probe 98. The position measurement probe 98 may be a touch probe configured to identify a position of the component 54 (e.g., a component surface position) relative to a three-dimensional coordinate space (e.g., a Cartesian coordinate space) based on physical contact with the component 54. For example, the position measurement probe 98 may be used to measure the shape, size, curvature, and other geometric features of the component 54 by sensing (e.g., contacting) discrete points on a surface of the component 54. The use of touch probes may facilitate more cost-effective position measurement compared to other measuring devices, however, the present invention is not limited to touch probes for the position measurement probe 98 and other measurement probes or measurement device configurations such as, but not limited to, contact scanning probes, non-contact probes, machine vision systems, optical scanners, etc. may be used to identify a position of the component 54 relative to a three-dimensional coordinate space.

The controller 72 of FIG. 4 is connected in signal communication with the machining system 70. The controller 72 includes a processor 100 and memory 102. The memory 102 is connected in signal communication with the processor 100. The processor 100 may include any type of computing device, computational circuit, or any type of process or processing circuit capable of executing a series of instructions that are stored in the memory 102, thereby causing the processor 100 to perform or control one or more steps or other processes. The processor 100 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, etc., and any combination thereof. The instructions stored in memory 102 may represent one or more algorithms for controlling aspects of the CNC assembly 68 and its machining system 70, and the stored instructions are not limited to any particular form (e.g., program files, system data, buffers, drivers, utilities, system programs, etc.) provided they can be executed by the processor 100. The instructions stored in memory 102 may be in the form of G-code, M-code, or another suitable programming language which can be executed by the controller 72 and/or its processor 100. The instructions stored in memory 102 may be generated by computer-aided design (CAD) or computer-aided manufacturing (CAM) software, whereby the physical dimensions of a particular workpiece (e.g., the component 54) may be translated into instructions (e.g., computer numerical control (CNC) instructions) for execution by the machining system 70. For example, the processor 100 may execute the 3D component model 52 in a CAD and/or CAM program to facilitate control of the machining system 70 to perform one or more steps for manufacture and/or repair of the component 54. The memory 102 may be a non-transitory computer readable storage medium configured to store instructions that when executed by one or more processors, cause the one or more processors to perform or cause the performance of certain functions. The memory 102 may be a single memory device or a plurality of memory devices. A memory device may include a storage area network, network attached storage, as well a disk drive, a read-only memory, random access memory, volatile memory, non-volatile memory, static memory, dynamic memory, flash memory, cache memory, and/or any device that stores digital information. One skilled in the art will appreciate, based on a review of this disclosure, that the implementation of the controller 72 may be achieved via the use of hardware, software, firmware, or any combination thereof. The controller 72 may also include input and output devices (e.g., keyboards, buttons, switches, touch screens, video monitors, sensor readouts, data ports, etc.) that enable the operator to input instructions, receive data, etc.

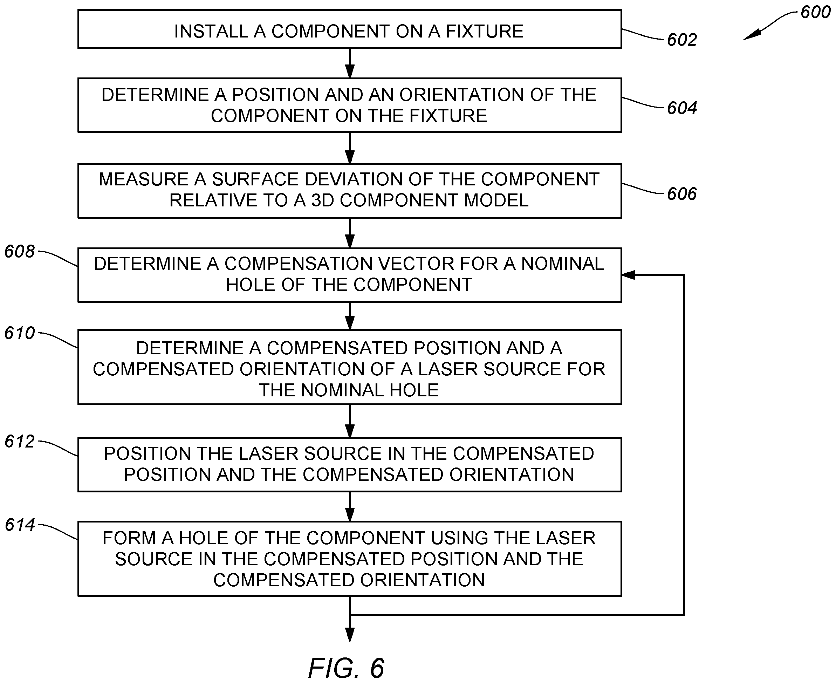

Referring to FIG. 6, a Method 600 for machining a component using a CNC assembly is provided. FIG. 6 illustrates a flowchart for the Method 600. The Method 600 is described herein with respect to the component 54 and the CNC assembly 68. The controller 72 may be used to execute or control one or more steps of the Method 600. For example, the processor 100 may execute instructions stored in memory 102, thereby causing the controller 72 and/or its processor 100 to execute or otherwise control one or more steps of the Method 600. However, it should be understood that the Method 600 is not limited to use with the component 54 or the CNC assembly 68 described herein. Unless otherwise noted herein, it should be understood that the steps of Method 600 are not required to be performed in the specific sequence in which they are discussed below and, in some embodiments, the steps of Method 600 may be performed separately or simultaneously. Moreover, performance of the Method 600 may not require performance of each of the steps of Method 600 discussed below.

The method 600 may be performed for the component 54, as described above. For example, the method 600 may be performed for the component 54, which component 54 may be deformed such that one or more dimensions of the component 54 deviate from the 3D component model 52 for the component 54. The component 54 may be deformed from previous operational use, for example, in a gas turbine engine (e.g., the gas turbine engine 22). The component 54 may additionally include one or more of the replacement body portions 62, as previously discussed, which may be machined (e.g., laser drilled) using the present invention method 600. The one or more original body portions 60 of the component 54 may or may not be machined using the present invention method 600.

Step 602 may include installing the component 54 on the workpiece positioning fixture 74. For example, the component 54 may be positionally fixed (e.g., mounted to, clamped to, attached to, etc.) on the workpiece positioning fixture 74.

Step 604 includes determining a position and an orientation of the component 54 relative to the machining system 70 such that a position of the component 54 can be compared to a position of the 3D component model 52 for the component 54.. For example, the controller 72 may identify the position and orientation of the component 54 by controlling the position measurement probe 98 (see FIG. 5B) to identify positions at a plurality of points of the component 54.

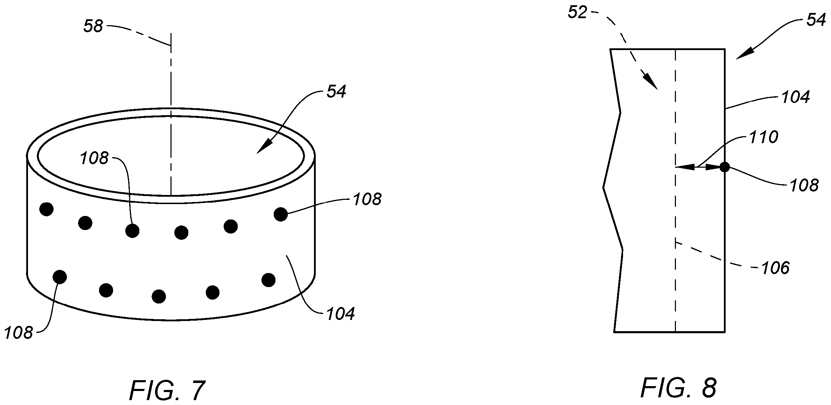

Referring to FIGS. 7 and 8, Step 606 includes measuring a surface deviation of the component 54 relative to the 3D component model 52. For example, the controller 72 may measure a surface deviation of a drilling surface 104 of the component 54 relative to a corresponding surface 106 of the 3D component model 52. The drilling surface 104 is a surface of the component 54 at which the laser source 92 may direct the laser beam 94 to form the holes 66 (see FIGS. 3 and 5A). The drilling surface 104 may be an exterior surface of the component 54. The drilling surface 104 may be formed by the replacement body portion 62 (e.g., only the replacement body portion 62) (see FIG. 3). The controller 72 may measure the surface deviation of the drilling surface 104 by controlling the machining system 70 (see FIG. 3) to position the position measurement probe 98 with the end effector 78 to identify a position of the drilling surface 104 at a plurality of points 108 on the drilling surface 104. The controller 72 may measure the surface deviation of the drilling surface 104 by determining a deviation distance 110 between each of the points 108 on the drilling surface 104 and the corresponding surface 106 of the 3D component model 52. A quantity of the points 108 may be a user selected parameter provided to the controller 72. The quantity of the points may vary depending, for example, on a complexity (e.g., a surface area, a curvature, shape, and/or other surface features) of the drilling surface 104. The quantity of points 108 may be a predetermined value assigned to the component 54 and stored in memory 102. In other words, the quantity of points 108 may be unique for a particular model, part number, or configuration of the component 54.

Step 606 may include identifying a surface deviation of the component 54 relative to the 3D component model 52 exceeds a threshold deviation. For example, the controller 72 may compare the deviation distance 110 for each of the points 108 to a threshold deviation distance. The component 54 may be identified as deformed where the deviation distance 110 is greater than or equal to the threshold deviation distance from one or more of the points 108. The component 54 may be identified as undeformed where the deviation distance 110 is less than (or less than or equal to) the threshold deviation distance from one or more of the points 108. Where the component 54 is identified as undeformed, compensation of the laser source 92 position and orientation, as will be discussed in further detail below, may not be performed. Routine experimentation and/or analysis may be performed by a person of ordinary skill in the art to determine suitable values of the threshold deviation distance for a particular component and machining process, in accordance with and as informed by one or more aspects of the present invention.

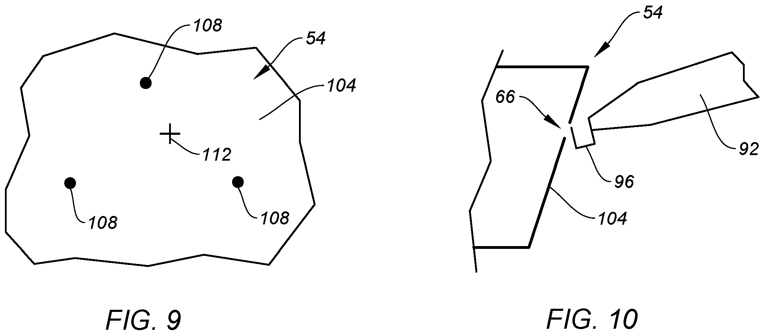

Referring to FIG. 9, Step 608 includes determining a compensation vector for one or more nominal holes 112 of the component 54. The term "nominal" as applied to the nominal holes 112 refers to a theoretical (e.g., design) hole location for the component 54 and which may be defined by the 3D component model 52 or by instructions stored in the memory 102. The nominal holes 112 may be used as a reference by the controller 72 when controlling the machining system 70 to machine the component 54, for example, to form the holes 66 (see FIG. 3). The controller 72 determines the compensation vector for the one or more nominal holes 112 using the measured a surface deviation of the component 54 relative to the 3D component model 52. For example, the controller 72 may determine the compensation vector for the nominal holes 112 using the measured deviation distance 110. The compensation vector is used account for position and/or orientation differences between the nominal holes 112 and the actual position and/or orientation of the drilling surface 104 where the holes 66 (corresponding to the nominal holes 112) will be formed. For example, the compensation vector may be determined for each of the nominal holes 112 using the measured deviation distance 110 at one or more of the points 108. The compensation vector may be determined for each of the nominal holes 112 using the measured deviation distance 110 at one of the points 108 which is closest to the respective one of the nominal holes 112. Alternatively, for example, the compensation vector may be determined for each of the nominal holes 112 using the measured deviation distance 110 at an adjacent subset of (e.g., less than all of) the points 108 adjacent the respective one of the nominal holes 112. The adjacent subset of the points 108 may include two of the points 108 closest to the respective one of the nominal holes 112, three of the points 108 closest to the respective one of the nominal holes 112, four of the points 108 closest to the respective one of the nominal holes 112, or a greater number of the points 108. The compensation vector may be determined for each of the nominal holes 112 using the measured deviation distance 110 from each of the adjacent subset of the points 108. For example, the compensation vector may be determined for each of the nominal holes 112 using an average of the measured deviation distance 110 from each of the adjacent subset of the points 108. The compensation vector may be determined for each of the nominal holes 112 using a weighted average of the measured deviation distance 110 from each of the adjacent subset of the points 108 based, for example, on a proximity of each point of the adjacent subset of the points 108 to the respective one of the nominal holes 112. Alternatively, the compensation vector may be determined for each of the nominal holes 112 using the measured deviation distance 110 at all of the points 108 within a predetermined distance (e.g., a distance along the drilling surface 104) of the respective one of the nominal holes 112.

Step 610 includes determining a compensated position and a compensated orientation for the laser source 92 for each of the nominal holes 112. Referring to FIG. 10, for example, the controller 72 may determine the compensated position and the compensated orientation for the laser source 92 to effect positioning of the laser source 92 with the correct stand-off distance 96 and orientation for forming the hole 66 in the component 54 corresponding to the respective one of the nominal holes 112. The controller 72 may identify the compensated position and compensated orientation for the laser source 92 by modifying a nominal position and a nominal orientation of the laser source 92 for each of the nominal holes 112 using the determined compensation vector for each respective one of the nominal holes 112. The term "nominal" as applied to the position and orientation of the laser source 92 refers to a theoretical position and orientation of the laser source 92 for forming the respective one of the nominal holes 112.

Step 612 includes positioning the laser source 92 in the compensated position and the compensated orientation. For example, the controller 72 may control the machining system 70 (e.g., the end effector 78) to position the laser source 92 in the compensated position and the compensated orientation.

Step 614 includes forming one of the holes 66 in the component 54 with the laser source 92 in the compensated position and the compensated orientation. For example, the controller 72 may control the laser source 92 to generate and direct the laser beam 94 to the drilling surface 104 to form one of the holes 66 with the laser source 92 in the compensated position and the compensated orientation.

Steps 608, 610, 612, and 614 may be performed (e.g., sequentially performed) to form each of the holes 66 for the component 54.

While the principles of the invention have been described above in connection with specific apparatuses and methods, it is to be clearly understood that this description is made only by way of example and not as limitation on the scope of the invention. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected, or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the inventions may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the inventions--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements.

## Claims

1. A computer numeric control (CNC) assembly (68) comprising:
a machining system (70) including at least one machining tool (90), wherein the machining system (70) is configured to move the at least one machining tool (90) relative to a component (54); and
a controller (72) including a processor (10) in communication with a non-transitory memory (102) storing instructions, which instructions when executed by the processor (100), cause the processor (102) to:
measure a surface deviation of a drilling surface (104) of the component (54) from a three-dimensional (3D) component model (52) for the component using a position measurement probe (98) of the at least one machining tool (90) to identify a position of the drilling surface (104) at a plurality of points (108) on the drilling surface (104);
determine a compensation vector for a nominal hole (112) for the drilling surface (104) using the measured surface deviation;
determine a compensated laser source stand-off position and a compensated laser source orientation for the nominal hole (112) using the determined compensation vector;
position a laser source (92) of the at least one machining tool (90) in the compensated laser source stand-off position and the compensated laser source orientation with the machining system (70); and
form a component hole (66) in the component (54) using the laser source (92) by directing a laser beam to the drilling surface (104) with the laser source (92) in the compensated laser source stand-off position and the compensated laser source orientation.

2. The CNC assembly (68) of claim 1, wherein the instructions, when executed by the processor (100), further cause the processor (100) to determine the compensation vector using a deviation distance (110) between a closest one of the plurality of points (108) to the nominal hole (112), wherein the deviation distance (110) is a distance between the drilling surface (104) and a corresponding surface (106) of the 3D component model (52) at the closest one of the plurality of points (108).

3. The CNC assembly (68) of claim 1, wherein the instructions, when executed by the processor (100), further cause the processor (100) to determine the compensation vector using a deviation distance (110) between an adjacent subset of the plurality of points (108) adjacent the nominal hole (112), wherein the deviation distance (110) is a distance between the drilling surface (104) and a corresponding surface (106) of the 3D component model (52) at each point (108) of the adjacent subset of the plurality of points (108).

4. The CNC assembly (68) of claim 3, wherein the instructions, when executed by the processor (100), further cause the processor (100) to determine the compensation vector using an average distance of the deviation distance (110) at each point (108) of the adjacent subset of the plurality of points (108).

5. The CNC assembly (68) of claim 3 or 4, wherein the instructions, when executed by the processor (100), further cause the processor (100) to determine the compensation vector using a weighted average distance of the deviation distance (110) at each point of the adjacent subset of the plurality of points (108), and the weighted average distance is determined based on a proximity of each point (108) of the adjacent subset of the plurality of points (108) to the nominal hole (112).

6. The CNC assembly (68) of claim 1, wherein the instructions, when executed by the processor (100), further cause the processor (100) to determine the compensation vector using a deviation distance (110) between an adjacent subset of the plurality of points (108) within a predetermined surface distance of the nominal hole (112), wherein the deviation distance (110) is a distance between the drilling surface (104) and a corresponding surface (106) of the 3D component model (52) at each point (108) of the adjacent subset of the plurality of points (108).

7. The CNC assembly (68) of any preceding claim, wherein the instructions, when executed by the processor (100), further cause the processor (100) to form a plurality of component holes (66) in the component (54) using the laser source (92), wherein the plurality of component holes (66) includes the component hole (66).

8. The CNC assembly (68) of any preceding claim, wherein a quantity of the plurality of points (108) is a predetermined value for the component (54).

9. The CNC assembly (68) of any preceding claim, wherein the position measurement probe (98) is a touch probe.

10. The CNC assembly (68) of claim 9, wherein the instructions, when executed by the processor (100), further cause the processor (100) to identify the position of the drilling surface (104) at the plurality of points (108) on the drilling surface (104) by positioning the position measurement probe (98) with the machining system (70) to contact the drilling surface (104) at each of the plurality of points (108).

11. A method for machining a component (54) using a CNC assembly (68), the method comprising:
measuring a deviation distance (110) of the component (54) from a three-dimensional (3D) component model (52) for the component using a position measurement probe (98) machining tool at a plurality of points (108) on the component (54);
determining a compensation vector of a nominal hole (112) of the component (54) using the measured deviation distance (110);
determining a compensated laser source stand-off position and a compensated laser source orientation for the nominal hole (112) using the determined compensation vector;
positioning a laser source (92) machining tool in the compensated laser source stand-off position and the compensated laser source orientation; and
forming a component hole (66) in the component using the laser source (92) machining tool by directing a laser beam to the component (54) with the laser source (92) machining tool in the compensated laser source stand-off position and the compensated laser source orientation.

12. The method of claim 11, wherein:
the component (54) includes an original body (60) portion and a replacement body portion (62) disposed on the original body portion (60); and
forming the component hole (66) in the component includes forming the component hole (66) in the replacement body portion (62).

13. The method of claim 11 or 12, wherein the component (54) has a first dimension (D1), the 3D component (52) has a second dimension (D2) corresponding to the first dimension (D1), and the first dimension (D1) is different than the second dimension (D2).

14. The method of claim 11, 12 or 13, further comprising identifying whether or not the measured deviation distance (110) exceeds a deviation distance threshold and, in response to the identification that the measured deviation distance (110) exceeds the deviation distance threshold, performing the step of determining the compensation vector of the nominal hole (112) of the component (54) using the measured deviation distance (110).

15. The method of any of claims 11 to 14, wherein determining the compensation vector includes:
determining the compensation vector using the deviation distance (110) between a closest one of the plurality of points (108) to the nominal hole (112); or
determining the compensation vector using the deviation distance (110) between an adjacent subset of the plurality of points (108) adjacent the nominal hole (112).
